# EUROPEAN PATENT SPECIFICATION

(11) **EP 3 467 289 B1**
(45) Date of publication and mention of the grant of the patent: **17.02.2021**
(21) Application number: 18196140.0
(22) Date of filing: 24.09.2018
(51) Int. Cl.: F02K 3/06, F02C 7/04

(54) **A GAS TURBINE ENGINE AND AIR INTAKE ASSEMBLY**
GASTURBINENMOTOR UND LUFTEINLASSANORDNUNG
MOTEUR À TURBINE À GAZ ET ENSEMBLE D'ADMISSION D'AIR

(30) Priority: 05.10.2017 GB 201716284
(43) Date of publication of application: 10.04.2019
(73) Proprietor: Rolls-Royce plc, London N1 9FX (GB)
(72) Inventor: Green, Jeffrey, Derby, Derbyshire DE24 8BJ (GB); Gonzalez-Gutierrez, Gabriel, Derby, Derbyshire DE24 8BJ (GB); Sgro, Domenico, Derby, Derbyshire DE24 8BJ (GB)
(74) Representative: Rolls-Royce plc

(56) References cited:
- EP-A1- 3 009 639
- EP-B1- 2 288 797
- GB-A- 2 259 114
- US-A1- 2010 276 007

## Description

The present disclosure concerns a gas turbine engine and air intake assembly for delivering a main airflow to a fan of the engine.

An intake for a turbofan gas turbine engine is required to supply the fan of the engine with an appropriate flow of air, which is favourably conditioned to reduce distortion levels over the complete flight envelope.

Flow distortion at the fan face induces fan vibration and aerodynamic performance loss. It is known that circumferential static pressure gradient at fan face decreases engine efficiency and increases generated noise.

Conventional intake designs aim at minimising the total pressure loss (aerodynamic loss) and Mach number variations, and providing a circumferentially-uniform total pressure and/or static pressure distortion. However, with conventional intake designs the fan still suffers from aerodynamic performance variations and fan blade vibrations compared to undistorted inlet airflow.

According to a first aspect there is provided a gas turbine engine and air intake assembly, wherein the gas turbine engine comprises a fan case and a fan housed therein adapted to rotate about an engine main axis; and the air intake is connected to the fan case to define an intake passage extending between an inlet highlight at a first end and an upstream face of the fan at a second end. The intake passage comprises upper and lower inner walls, the intersection of which with a meridional plane containing the engine main axis defines, respectively, an upper inner profile and a lower inner profile of the intake passage, a camber line being defined by the locus of the centres of the circles tangent to both the upper inner profile and lower inner profile. The intake passage further comprises in flow series an intake lip, a most upstream portion of which defines the intake highlight and a most downstream portion of which defines a throat, a diffuser with sectional area broadening towards the fan; and a straight conditioning duct, arranged immediately upstream of the fan. The camber line intersects the engine main axis at an intersecting point upstream of the fan and the camber line is parallel to the engine main axis in the straight conditioning duct.

A fan typically comprises an array of radially extending fan blades mounted on a rotor. Each fan blade may include a pressure surface, a suction surface, a leading edge and a trailing edge. The upstream face of the fan is a surface swept by the leading edge of the fan blades during rotation about the engine main axis.

In the present disclosure, reference to upstream and downstream refers to the direction of the axial flow of air through the gas turbine engine.

The assembly according to the first aspect allows to minimise circumferential variations of airflow residual flow up-wash, or flow angularity, at the fan upstream face relative to a normal plane perpendicular to the meridional plane that contains the engine main axis.

It has been found that residual flow angularity, due to aircraft angle of attack, and/or lift generated by the wing, and/or canted or not-canted engine, is the most influential distortion parameter: by reducing residual flow angularity it will then be reduced fan vibration and improve aerodynamic performance.

In particular, residual flow angularity leads to incidence distortion, co-swirl and contra-swirl, onto the fan blades which has two effects: 1) fan aerodynamic performance varies such that mean performance over one revolution is reduced; and 2) blade loading appreciably oscillates due to the change in angle of attack which leads to significant once-per-revolution forces on the fan blade. These dynamic forces lead to fan blade vibrations which may lead to high-cycle fatigue which is an undesirable design trait.

Being defined the camber line by the locus of the centres of the circumferences tangent to both the upper inner profile and lower inner profile of the intake passage, flow angularity at the fan upstream face of the fan is reduced by the straight conditioning duct featuring a camber line parallel to the engine main axis. Moreover, flow angularity at the fan upstream face of the fan may be further reduced by having a camber line parallel to the engine main axis upstream of the straight conditioning duct. For example, the camber line may be parallel to the engine main axis in at least one portion of the diffuser, for example immediately upstream of the straight conditioning duct.

In another example, the camber line may extend parallel to the engine main axis across the whole diffuser.

The diffuser may be cambered. The camber line may be angled with respect to the engine main axis in the diffuser.

The camber line in the diffuser may be curved. Furthermore, the camber line in the diffuser may comprise a curved tract and a rectilinear tract. The rectilinear tract may be parallel to, or coincident with, the engine main axis.

The camber line and the engine main axis may coincide between the intersecting point and the upstream face of the fan.

The intersecting point may be arranged in the diffuser. Alternatively, the intersecting point may be arranged in the intake lip.

The camber line may always lie below the engine main axis. Alternatively, the camber line may intersect the engine main axis in two points, a tract of the camber line comprised between said two points lying above the engine main axis.

The inlet highlight defines an airflow entry plane, the camber line and the engine main axis intersecting the airflow entry plane in a first and a second point, respectively. The first point may lie below the second point.

The camber line at the intake lip may comprise at least one curved tract.

According to an aspect, the straight conditioning duct may be achieved at least partially in the fan case. The air intake may be connected to a forward connecting face of the fan case, known as A1 flange, at a connecting interface. The connecting interface may be located in the diffuser or in the straight conditioning duct. In other words, the A1 flange may be arranged in the diffuser, such that the straight conditioning duct may be defined solely by the fan case, or in the straight conditioning duct, such that the straight conditioning duct may be defined by a downstream end portion of the air intake and an upstream end portion of the fan case.

According to an aspect, the camber line may intersect the engine main axis upstream of the fan at an intersecting point. Upstream of the intercepting point the camber line may lie below the engine main axis. Downstream of the intersecting point, the camber line and the engine main axis may be parallel. Furthermore, downstream of the intersecting point, the camber line and the engine main axis may coincide.

According to an aspect, the camber line and the engine main axis may coincide along the straight conditioning duct.

According to an aspect, the gas turbine engine and air intake assembly may comprise a nose cone, which may be positioned in the straight conditioning duct. The nose cone may have a symmetry axis lying on the engine main axis and extending from a nose cone tip to a nose cone base. The intersecting point may lie upstream of the nose cone, for example upstream of the nose cone tip. Alternatively, the intersecting point may lie within the nose cone, or at the nose cone tip.

According to an aspect, the straight conditioning duct may extend axially along the engine main axis at least half the amount of the nose cone. According to another aspect, the straight conditioning duct may extend axially along the engine main axis at least the same amount of the nose cone. According to another aspect, the straight conditioning duct may extend axially along the engine main axis the same amount of the nose cone. According to another aspect, the straight conditioning duct may extend axially along the engine main axis more than the amount of the nose cone. For example, the nose cone may extend axially along the engine main axis for a length L2, and the straight conditioning duct may extend axially along the engine main axis for a length L1. L1/L2 may be comprised between 1 and 2, for example 1.2 and 2, or 1.5 and 2, or 1 and 1.8, or 1 and 1.5.

According to an aspect, the intake passage may extend for a length L and the camber line may extend between the intersecting point and the upstream face of the fan for a length L3. L3/L may be comprised between 0.3 and 0.9. For example, L3/L may be greater than a minimum value of 0.3, or 0.4, or 0.5, or 0.6, or 0.7 or 0.8. Moreover, L3/L may be less than a maximum value of 0.9, or 0.8 or 0.7, or 0.6, or 0.5, or 0.4. Moreover, L3/L may be comprised in a range having any of the minimum values listed above as a lower bound and any of the maximum values listed above as an upper bound.

As an example, L3/L may be comprised between 0.4 and 0.9, or 0.5 and 0.9, or 0.6 and 0.9, or 0.7 and 0.9, or 0.8 and 0.9. Furthermore, L3/L may be comprised between 0.3 and 0.8, or 0.3 and 0.7, or 0.3 and 0.6, or 0.3 and 0.5, or 0.3 and 0.4. As further example, L3/L may be comprised between 0.4 and 0.8, or 0.5 and 0.7.

According to an aspect, the diffuser may be connected at a first end to the intake lip and at a second end to the straight conditioning duct. Moreover, the intake lip may be arranged upstream of the diffuser and the straight conditioning duct may be arranged downstream of the diffuser.

The A1 flange may be arranged between the diffuser and the straight conditioning duct, such that the straight conditioning duct is defined solely by the fan casing. In other words, the connecting interface may be arranged between the diffuser and the straight conditioning duct.

The intake lip may comprise an upper intake lip and a lower intake lip. The upper intake lip may be axially (with respect to the engine main axis) further forward or further rearward relative to the lower intake lip, which leads to an angle between the intake highlight and a vertical direction perpendicular to the engine main axis. If the forward direction is said to be positive, the value of the angle may be between -5° and +5°. Alternatively, the upper intake lip and the lower intake lip may be vertically aligned, or in other words, the angle may be null.

It is common practice to express gas engine dimensions relative to the fan entry diameter D, i.e. a diameter of a fan casing cross-section at the upstream face of the fan. Being L the intake passage length, i.e. the overall length of the intake lip, the diffuser and the straight conditioning duct measured along the engine main axis, L normalised to the fan entry diameter D may be between L/D=0.25 and L/D=1.0. For example, the fan entry diameter D may be comprised between 2 m and 4 m.

According to an aspect, the camber line upstream of the intersecting point may have a radius of curvature between 0.5 and 30 fan entry diameters D.

According to an aspect, the camber line may have a radius of curvature at an exit of the diffuser of less than 30 fan entry diameters.

According to an aspect, the camber line may have a radius of curvature in the diffuser between 0.5 and 30 fan entry diameters.

According to an aspect, the camber line may have a minimum radius of curvature of less than 30 fan entry diameters. In particular, the camber line may have a minimum radius of curvature between 0.5 and 15 fan entry diameters.

According to an aspect, the camber line may have a radius of curvature at the inlet highlight of less than 30 fan entry diameters D.

According to an aspect, the diffuser may have a maximum area, i.e. a section on a plane perpendicular to the camber line, between 1.0 and 1.2 times a fan entry area.

According to an aspect, the minimum radius of curvature may be located at a distance from the inlet highlight no greater than 0.6, for example no greater than 0.5, 0.4, 0.3, or 0.2, or 0.1 times an axial distance between the inlet highlight and an exit of the diffuser. Furthermore, the minimum radius of curvature may be located at a distance from the inlet highlight no less than 0.1, for example no less than 0.5, or 0.4, or 0.3, or 0.2, or 0.1 times the axial distance between the inlet highlight and the exit of the diffuser. For example, the minimum radius of curvature may be located at a distance from the inlet highlight comprised between 0.1 and 0.6, or 0.2 and 0.5, or 0.3 and 0.4, times the axial distance between the inlet highlight and the exit of the diffuser.

According to an aspect, the intake lip and the diffuser may be achieved in the air intake and the straight conditioning duct may be achieved in the fan case. In other words, according to the latter aspect, the air intake may comprise both the intake lip and the diffuser, while the fan case may comprise the straight conditioning duct. Alternatively to the latter aspect, the straight conditioning duct may partly be achieved in the fan case and partly in the intake. In other words, the straight conditioning duct may comprise a downstream end portion of the intake and an upstream end portion of the fan case.

According to an aspect, the air intake may be connected to the forward connecting face of the fan case to define a connecting interface that may be located in the straight conditioning duct.

Embodiments will now be described by way of example only, with reference to the Figures, in which:
**Figure 1** is a sectional side view of a gas turbine engine;
**Figure 2** is a sectional side view of a gas turbine engine and air intake assembly arranged within a nacelle;
**Figure 3** is a sectional side view of a forward part of a gas turbine engine and air intake assembly according to a first embodiment;
**Figure 4** is a diagram showing flow angularity relative to the engine main axis against normalised axial distance;
**Figure 5** is a diagram showing sectional area relative to a fan entry area against normalised axial distance;
**Figure 6** is a diagram showing flow Mach number against normalised axial distance;
**Figure 7** is a sectional side view of a forward part of a gas turbine engine and air intake assembly according to a second embodiment;
**Figure 8** is a sectional side view of a forward part of a gas turbine engine and air intake assembly according to a third embodiment;
**Figure 9** is a sectional side view of a forward part of a gas turbine engine and air intake assembly according to a forth embodiment; and
**Figure 10** is a diagram showing flow angularity relative to the engine main axis against normalised axial distance of the forth embodiment.

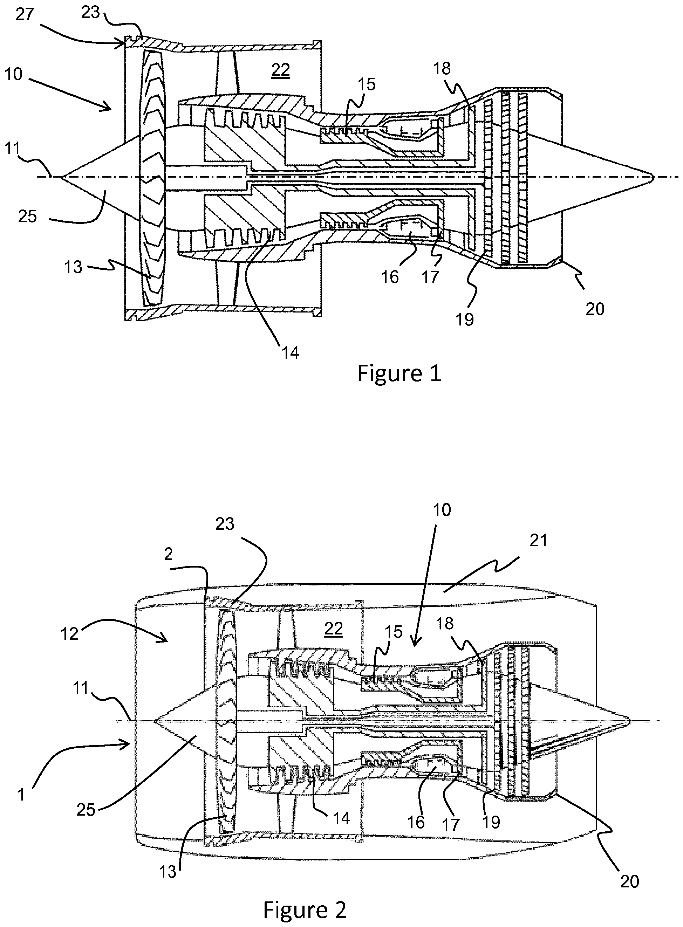

With reference to figure 1 and figure 2, a gas turbine engine and air intake assembly, generally indicated at 1, comprises a gas turbine engine 10, having an engine main axis 11, and an air intake 12.

The engine 10 comprises, in axial flow series, a propulsive fan 13 housed within a respective fan case 23, an intermediate pressure compressor 14, a high-pressure compressor 15, combustion equipment 16, a high-pressure turbine 17, an intermediate pressure turbine 18, a low-pressure turbine 19 and an exhaust nozzle 20. The fan 13 may comprise a nose cone 25.

The fan 13, compressors 14, 15 and turbines 17, 18, 19 all rotate about a same axis of rotation and so define the engine main axis 11 of the gas turbine engine 10.

The intake 12 is connected to the fan case 23, in particular to a forward connecting face 27 of the fan case 23, known as A1 flange, so defining a connecting interface 24. The intake 12 may be part of a nacelle 21. Alternatively, the intake 12 may be a separate component and connected to the nacelle 21 in any suitable way.

The gas turbine engine and air intake assembly 1 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted to generate a high-speed, hot working fluid. The high-speed, hot working fluid is discharged through the high pressure turbine 17, the intermediate pressure turbine 18 and the low pressure turbine 19 in series where work is extracted from the working fluid. The work extracted drives the fan 13, the intermediate pressure compressor 14 and the high pressure compressor 15, each by suitable interconnecting shaft. The working fluid, which has reduced in pressure and temperature, is then expelled through the exhaust nozzle 20 and generates the remaining portion of the engine 10 thrust.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

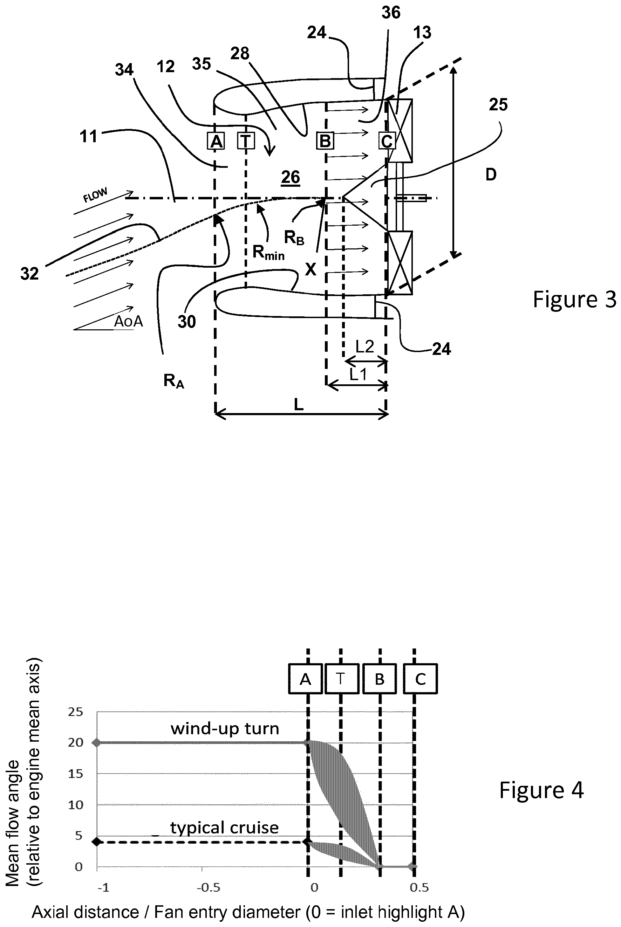

With reference to figure 3, there is schematically illustrated the air intake 12 and the fan 13 of the gas turbine engine and air intake assembly 1 according to the first embodiment. The air intake 12 is connected to the forward connecting face 27 of the fan case 23 to define an intake passage 26 extending between an inlet highlight A at a first end and an upstream face C of the fan 13 at a second end.

The intake passage 26 comprises, in flow series, an intake lip 34, a diffuser 35 and a straight conditioning duct 36.

The diffuser 35 illustrated in figure 3 is cambered. In other embodiments, the diffuser may not be cambered.

The straight conditioning duct 36 is arranged downstream of the cambered diffuser 35. More particularly, the straight conditioning duct 36 is connected to an exit B of the cambered diffuser 35. Moreover, the straight conditioning duct 36 is arranged immediately upstream of the fan 13 and extends axially for a length L1.

The intake passage 26 features upper and lower inner walls, the intersection of which with a meridional plane containing the engine main axis 11 defines, respectively, an upper inner profile 28 and lower inner profile 30 of the intake passage 26. A camber line 32 is defined by the locus of the centres of the circles tangent to both the upper inner profile 28 and lower inner profile 30.

The camber line 32 can be defined by a single circular arc or a more complex curve such as a parabolic manifold, an elliptical arc, a lemniscate arc, a Bezier curve, etc. Such a camber line 32 can be defined by a local radius of curvature at three different axial locations, or sections: the inlet highlight A, the cambered diffuser exit B, and an intermediate location for which the radius of curvature is minimum. The radius of curvature (R_{A}, R_{B}) at the inlet highlight A and the cambered diffuser exit B sections is less than 30 fan entry diameters D. The minimum radius of curvature (Rₘᵢₙ) may be located at a distance from the inlet highlight A section no greater than 0.6 times an axial distance between the inlet highlight A section and the cambered diffuser exit B section. The minimum radius of curvature Rₘᵢₙ may be no more than 30 fan entry diameters D, for example between 0.5 and 15 fan entry diameters D depending on the aircraft operation. A skilled aerodynamicist will try to minimise the changes in curvature transitioning between the three sections to ensure flow smoothness. In other words, from the inlet highlight A and the cambered diffuser exit B, the tangent of the camber line 32 progressively decreases to zero.

The camber line 32 is parallel to the engine main axis 11 in the straight conditioning duct 36. In other words, the tangent of the camber line 32 in the straight conditioning duct 36 is zero, where zero is the tangent of the engine main axis as well.

According to the embodiment of figures 1-3, the straight conditioning duct 36 is achieved at least partially in the fan case 23. More particularly, the straight conditioning duct 36 is achieved partially in the fan case 23 and partially in the air intake 12. In other words, the fan case 23 and the air intake 12, in particular a downstream end portion of the air intake 12, define the straight conditioning duct 36. In such embodiment, the connecting interface 24 is arranged in the straight conditioning duct 36.

In other non-illustrated embodiments, the fan case 13 solely defines the straight conditioning duct 36, and the air intake 12 defines the intake lip 34 and the cambered diffuser 35. In that case, the exit B of the cambered diffuser 35 is arranged at the connecting interface 24.

The camber line 32 intersects the engine main axis 11 upstream of the fan 13 at an intersecting point X. The camber line extends between the intersecting point X and the upstream face C of the fan 13 for a length L3. The intersecting point X lies at the exit B of the cambered diffuser 35. In figure 3 embodiment, L3 is equal to L1. Upstream of the intersecting point X the camber line 32 lies below the engine main axis. The camber line 32 does not intersect the engine main axis 11 at the inlet highlight A.

In other non-illustrated embodiments, the camber line 32 may intersect the engine main axis 11 in more than one intersecting point, for example in two points, distanced from the inlet highlight A.

Downstream of the intersecting point X, the camber line 32 and the engine main axis 11 coincide.

In figure 3 embodiment, the intersecting point X lies upstream of the nose cone 25.

If the nose cone 25 extends axially along the engine main axis 11 for a length L2, then in figure 3 embodiment L1 is greater than L2.

In other non-illustrated embodiments, L1 may be equal to L2, or L1 may be less than L2 and greater than half L2.

How the assembly according to the embodiment of figure 3 affects an air stream flowing through the intake passage 26 will now be described with reference to diagrams of figures 4 to 6. In particular, in figure 4, two different flight conditions are illustrated: at wind-up turn and typical cruise.

Due to pressure field created by the assembly and the subsonic conditions of the air flow upstream of the assembly, in particular upstream of the inlet highlight A, the airflow travelling at an Angle of Attack (AoA), which is typically in the range of 0° to 35°, is decelerated without any substantial changes in direction of travel.

Once the air flow arrives at the intake lip 34, the air flow is further decelerated and it starts being turned towards the engine main axis 11. The airflow features a maximum local speed that is limited to 1.3 to 1.4 times a local speed of sound in order to limit energy loss close to the inner walls.

The minimum sectional area of the intake passage 26 is usually referred to as throat T. The throat T is arranged between the intake lip 34 and the cambered diffuser 35. The throat area is defined by the maximum normalised flow required by the fan. Typically, it is required 1.05 to 1.20 times the maximum normalised flow expected through the fan to avoid 'choking' the intake. This condition implies that the flow reaches the speed of sound across the whole sectional area limiting the maximum mass flow rate, and therefore, the maximum thrust achieved by the machine.

Following the throat T, the cambered diffuser 35 removes the remaining flow angularity, whilst it further decelerates the air flow. In other embodiments, the cambered diffuser 35 may not decelerate the airflow. The cambered diffuser 35 features a maximum area (i.e. sectional area on a plane perpendicular to the camber line 32) between 1.0 and 1.2 times the fan entry area.

Following the cambered diffuser 35, the air flow enters the straight conditioning duct 36 and then reaches the fan 13. A mean flow of the airflow passing through the straight conditioning duct 36 does not experience a significant amount of turning.

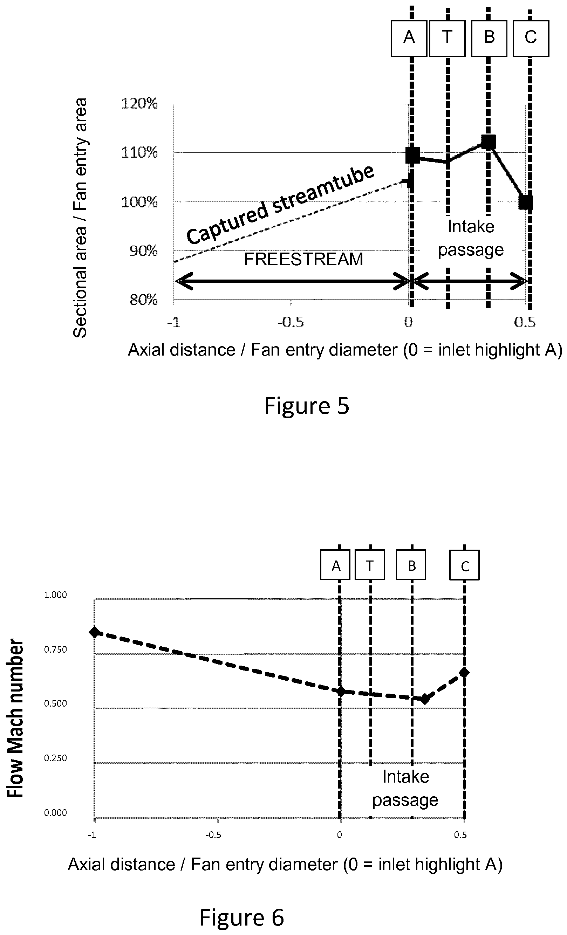

However, the mean flow might experience acceleration, deceleration, neither, or a combination thereof. Figure 6 illustrates an example where the mean flow is initially decelerated and subsequently accelerated (due to the presence of the nose cone 25). In the illustrated embodiment, all the flow turning is applied upstream of the nose cone 25. It is to be noted that the nose cone may break the pressure gradient in a direction transverse to the flow which may impede further turning.

As illustrated in figure 4, the assembly according to the first embodiment removes air flow angularity between the inlet highlight A of the intake lip 34 and the exit B of the cambered diffuser 35; and therefore, the air flow leaves the cambered diffuser 35, and reaches the upstream face C of the fan 13, predominantly perpendicular to the same upstream face C of the fan 13, resulting in reduced mechanical vibrations of the fan 13 and, in particular, the fan blades.

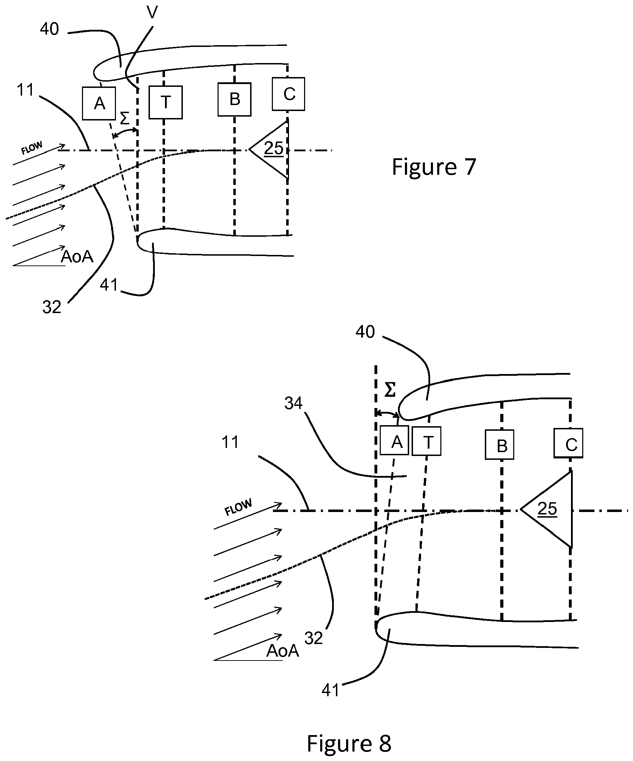

In figures 7 and 8, a second and third embodiment are respectively illustrated. Like features between Figures 1-3 and 7 and 8 are given like reference numerals, and will not be described again in relation to Figures 7 and 8.

The intake lip 34 comprises an upper intake lip 40 and a lower intake lip 41. According to the second embodiment of figure 7, the axial position of the upper intake lip 40 is further forward, i.e. upstream, relative to the lower intake lip 41, which leads to an angle Σ between a direction passing through the inlet highlight A and a vertical direction V perpendicular to the engine main axis 11. If the forward, i.e. upstream, direction is said to be positive, the value of the angle Σ may be between 0° and +5°.

In the third embodiment of figure 8, the axial position of the upper intake lip 40 is further rearward, i.e. downstream, relative to the lower intake lip 41, which leads to an angle Σ with negative value, between -5° and 0°.

Conversely, in the first embodiment of figures 1-3, the value of Σ is null, i.e. the upper intake lip 40 and the lower intake lip 41 are vertically aligned.

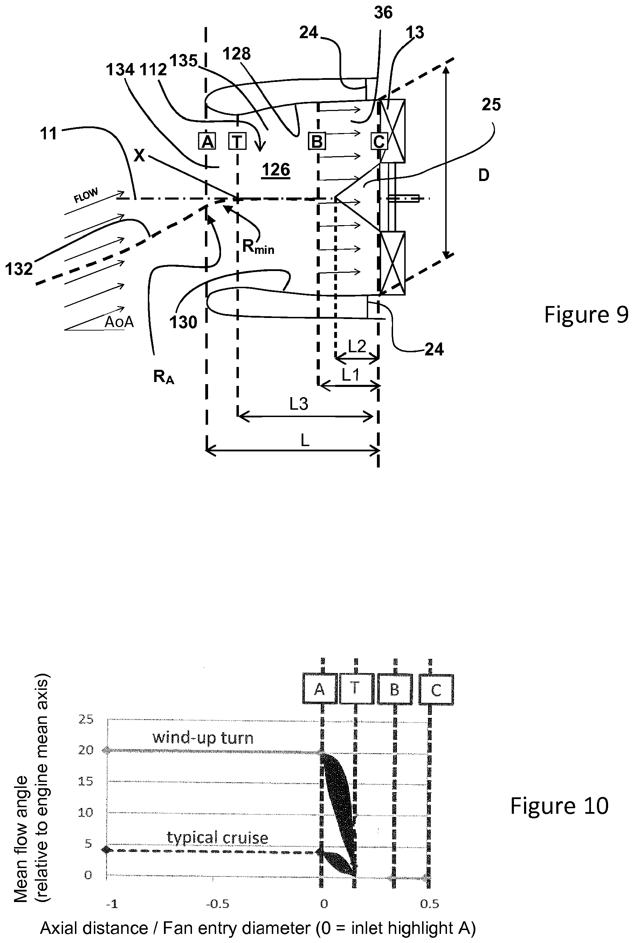

In figure 9 there is illustrated a forth embodiment of gas turbine engine and air intake assembly. Similar reference numerals are used for similar features as those previously described, but with a prefix "1". Mainly the differences between the present embodiment and the previous embodiments will be described.

In figure 9, there is schematically illustrated an air intake 112 and a fan 13. The air intake 112 is connected to the forward connecting face 27 of the fan case 23 to define an intake passage 126 extending between an inlet highlight A at a first end and an upstream face C of the fan 13 at a second end.

The intake passage 126 comprises, in flow series, an intake lip 134, a diffuser 135 and a straight conditioning duct 36. The main difference with the previously described embodiments is that the intake passage 126 is shaped to remove flow angularity mainly in the intake lip 134, upstream of the diffuser 135.

In this regards, the diffuser 135 is not cambered. In other words, in the diffuser 135, the camber line 132 is parallel to the engine main axis 11. For example, the camber line 132 coincides to the engine main axis 11 in the diffuser 135.

The intersecting point X may lie at the throat T, as illustrated in figure 9, or upstream of the throat T in the intake lip 134. For example, L3/L may be about, or less than, 0.3.

By turning the airflow mainly in the intake lip 134, residual flow angularity may further be reduced with respect to the previous embodiments, so reducing fan vibration and improving aerodynamic performance.

This is illustrated in figure 10, where the flow angularity is illustrated relative to the axial distance normalised to the fan entry diameter D.

In other not illustrated embodiments, the intersecting point X may lie in the diffuser, such that the camber line in the diffuser may comprise a curved tract and a rectilinear tract. The camber line may be curved upstream of the intersecting point and coincident to the engine main axis downstream of the intersecting point.

In the embodiment of figure 9, the angle Σ is null, but in not illustrated embodiments the intake lip may be shaped to have the angle Σ comprised between -5° and +5°, analogously as illustrated in figures 7 and 8.

It will be understood that the invention is not limited to the embodiments above-described and various modifications and improvements can be made without departing from the concepts described herein. The scope of the invention is defined by the appended claims.

## Claims

1. A gas turbine engine (10) and air intake (12) assembly (1), wherein:
- the gas turbine engine (10) comprises a fan case (23) and a fan (13) housed therein adapted to rotate about an engine main axis (11); and the air intake (12) is connected to the fan case (23) to define an intake passage (26) extending between an inlet highlight (A) at a first end and an upstream face (C) of the fan (13) at a second end;
- the intake passage (26) comprises upper and lower inner walls, the intersection of which with a meridional plane containing the engine main axis (11) defines, respectively, an upper inner profile (28) and a lower inner profile (30) of the intake passage (26), a camber line (32) being defined by the locus of the centres of the circles tangent to both the upper inner profile (28) and lower inner profile (30); and
- said intake passage (26) further comprises in flow series:
an intake lip (34), a most upstream portion of which defines the intake highlight (A) and a most downstream portion of which defines a throat (T),
a diffuser (35) with sectional area broadening towards the fan (13); and
a straight conditioning duct (36), arranged immediately upstream of the fan (13),
wherein the camber line (32) intersects the engine main axis (11) at an intersecting point (X) upstream of the fan (13) and wherein the camber line (32) is parallel to the engine main axis (11) in the straight conditioning duct (36).

2. A gas turbine engine and air intake assembly according to claim 1, wherein the air intake (12) is connected to a forward connecting face (27) of the fan case (23) to define a connecting interface (24), said connecting interface (27) being located in the diffuser (35) or in the straight conditioning duct (36)..

3. A gas turbine engine and air intake assembly according to any one of the preceding claims, wherein the camber line (32) between the intersecting point (X) and the upstream face (C) of the fan (13) is parallel to the engine main axis (11).

4. A gas turbine engine and air intake assembly according to any one of the preceding claims, wherein the camber line (32) and the engine main axis (11) coincide between the intersecting point (X) and the upstream face (C) of the fan (13).

5. A gas turbine engine and air intake assembly according to any one of the preceding claims, wherein the intersecting point (X) is arranged in the diffuser (35).

6. A gas turbine engine and air intake assembly according to any one of claims 1 to 4, wherein the intersecting point (X) is arranged in the intake lip (34).

7. A gas turbine engine and air intake assembly according to any one of the preceding claims, wherein the camber line (32) at the intake lip (34) comprises at least one curved tract.

8. A gas turbine engine and air intake assembly according to any one of the preceding claims, further comprising a nose cone (25), said nose cone being positioned in the straight conditioning duct (36).

9. A gas turbine engine and air intake assembly according to the preceding claim, wherein the nose cone (25) extends axially along the engine main axis (11) for a length L2, and the straight conditioning duct (36) extends axially along the engine main axis (11) for a length L1, L1/L2 being comprised between 1 and 2.

10. A gas turbine engine and air intake assembly according to any one of the preceding claims, wherein the intake passage (26) extend for a length L and the camber line (32) extends between the intersecting point (x) and the upstream face (C) of the fan (13) for a length L3, L3/L being comprised between 0.3 and 0.9, preferably between 0.4 and 0.8.

11. A gas turbine engine and air intake assembly according to any one of the preceding claims, wherein the fan (13) has an entry diameter D and the camber line (32) has a radius of curvature (R_{A}) at the inlet highlight (A) of less than 30 fan entry diameters D.

12. A gas turbine engine and air intake assembly according to any one of the preceding claims, wherein the camber line (32) has a minimum radius of curvature (Rₘᵢₙ) of less than 30, preferably between 0.5 and 15, fan entry diameters D.

13. A gas turbine engine and air intake assembly according to the preceding claim, wherein the minimum radius of curvature (Rₘᵢₙ) is located at a distance from the inlet highlight (A) no greater than 0.6 times, preferably comprised between 0.1 and 0.6, an axial distance between said inlet highlight (A) and an exit (B) of the diffuser (35).

14. A gas turbine engine and air intake assembly according to any one of the preceding claims, wherein the camber line (32) upstream of the intersecting point (X) has a radius of curvature between 0.5 and 30 fan entry diameters D.

15. A gas turbine engine and air intake assembly according to any one of the preceding claims, wherein the camber line (32) has a radius of curvature at an exit (B) of the diffuser (35) of less than 30 fan entry diameters D.

## Patentansprüche

1. Anordnung (1) aus Gasturbinentriebwerk (10) und Lufteinlauf (12), wobei:
- das Gasturbinentriebwerk (10) ein Fan-Gehäuse (23) und einen darin untergebrachten Fan (13) umfasst, der angepasst ist, um um eine Triebwerkshauptachse (11) zu drehen; und der Lufteinlauf (12) mit dem Fan-Gehäuse (23) verbunden ist, um einen Einlaufkanal (26) zu definieren, der sich zwischen einem Einlaufhöhepunkt (A) an einem ersten Ende und einer stromaufwärtigen Fläche (C) des Fans (13) an einem zweiten Ende erstreckt;
- der Einlaufkanal (26) eine obere und eine untere Innenwand aufweist, deren Schnittpunkt mit einer meridionalen Ebene, die die Triebwerkshauptachse (11) enthält, ein oberes inneres Profil (28) bzw. ein unteres inneres Profil (30) des Einlaufkanals (26) definiert, wobei eine Wölbungslinie (32) durch die Ortslinie der Mittelpunkte der Kreise definiert ist, die sowohl das obere innere Profil (28) als auch das untere innere Profil (30) tangieren; und
- der Einlaufkanal (26) ferner in Strömungsreihe Folgendes umfasst:
eine Einlauflippe (34), wovon ein am meisten stromaufwärtiger Abschnitt den Einlaufhöhepunkt (A) definiert und ein am meisten stromabwärtiger Abschnitt eine Kehle (T) definiert, einen Diffusor (35) mit einem sich zum Fan (13) hin verbreiternden Querschnittsbereich; und einen geraden Konditionierungskanal (36), der unmittelbar stromaufwärts von dem Fan (13) angeordnet ist,
wobei die Wölbungslinie (32) die Triebwerkshauptachse (11) an einem Schnittpunkt (X) stromaufwärts von dem Fan (13) schneidet und wobei die Wölbungslinie (32) parallel zu der Triebwerkshauptachse (11) in dem geraden Konditionierungskanal (36) ist.

2. Gasturbinentriebwerk- und Lufteinlaufanordnung nach Anspruch 1, wobei der Lufteinlauf (12) mit einer vorderen Verbindungsfläche (27) des Fan-Gehäuses (23) verbunden ist, um eine Verbindungsschnittfläche (24) zu definieren, wobei die Verbindungsschnittfläche (27) in dem Diffusor (35) oder in dem geraden Konditionierungskanal (36) angeordnet ist.

3. Gasturbinentriebwerk- und Lufteinlaufanordnung nach einem der vorherigen Ansprüche, wobei die Wölbungslinie (32) zwischen dem Schnittpunkt (X) und der stromaufwärtigen Fläche (C) des Fans (13) parallel zu der Triebwerkshauptachse (11) ist.

4. Gasturbinentriebwerk- und Lufteinlaufanordnung nach einem der vorherigen Ansprüche, wobei sich die Wölbungslinie (32) und die Triebwerkshauptachse (11) zwischen dem Schnittpunkt (X) und der stromaufwärtigen Fläche (C) des Fans (13) decken.

5. Gasturbinentriebwerk- und Lufteinlaufanordnung nach einem der vorherigen Ansprüche, wobei der Schnittpunkt (X) in dem Diffusor (35) angeordnet ist.

6. Gasturbinentriebwerk- und Lufteinlaufanordnung nach einem der Ansprüche 1 bis 4, wobei der Schnittpunkt (X) in der Einlauflippe (34) angeordnet ist.

7. Gasturbinentriebwerk- und Lufteinlaufanordnung nach einem der vorherigen Ansprüche, wobei die Wölbungslinie (32) an der Einlauflippe (34) mindestens einen gekrümmten Strang aufweist.

8. Gasturbinentriebwerk- und Lufteinlaufanordnung nach einem der vorherigen Ansprüche, ferner umfassend einen Nasenkonus (25), wobei der Nasenkonus in dem geraden Konditionierungskanal (36) angeordnet ist.

9. Gasturbinentriebwerk und Lufteinlaufanordnung nach dem vorhergehenden Anspruch, wobei sich der Nasenkonus (25) axial über eine Länge L2 entlang der Triebwerkshauptachse (11) erstreckt und der gerade Konditionierungskanal (36) sich über eine Länge L1 axial entlang der Triebwerkshauptachse (11) erstreckt, wobei L1/L2 zwischen 1 und 2 liegt.

10. Baugruppe aus Gasturbinentriebwerk und Lufteinlauf nach einem der vorstehenden Ansprüche, wobei sich der Einlaufkanal (26) über eine Länge L und die Wölbungslinie (32) über eine Länge L3 zwischen dem Schnittpunkt (x) und der stromaufwärtigen Fläche (C) des Fans (13) erstreckt, wobei L3/L zwischen 0,3 und 0,9, vorzugsweise zwischen 0,4 und 0,8, liegt.

11. Gasturbinentriebwerk- und Lufteinlaufanordnung nach einem der vorherigen Ansprüche, wobei der Fan (13) einen Eintrittsdurchmesser D und die Wölbungslinie (32) einen Krümmungsradius (R_{A}) an der Einlaufhöhe (A) von weniger als 30 Fan-Eintrittsdurchmessern D aufweist.

12. Gasturbinentriebwerk- und Lufteinlaufanordnung nach einem der vorherigen Ansprüche, wobei die Wölbungslinie (32) einen minimalen Krümmungsradius hat (Rₘᵢₙ) von weniger als 30, vorzugsweise zwischen 0,5 und 15, Fan-Eintrittsdurchmessern D aufweist.

13. Gasturbinentriebwerk- und Lufteinlaufanordnung nach einem der vorherigen Ansprüche, wobei sich der minimale Krümmungsradius (Rₘᵢₙ) in einem Abstand von der Einlaufhöhe (A) von nicht mehr als dem 0,6-fachen, vorzugsweise zwischen 0,1 und 0,6, einem axialen Abstand zwischen dem Einlaufhöhepunkt (A) und einem Ausgang (B) des Diffusors (35) befindet.

14. Gasturbinentriebwerk- und Lufteinlaufanordnung nach einem der vorherigen Ansprüche, wobei die Wölbungslinie (32) stromaufwärts von dem Schnittpunkt (X) einen Krümmungsradius zwischen 0,5 und 30 Fan-Eintrittsdurchmessern D aufweist.

15. Gasturbinentriebwerk- und Lufteinlaufanordnung nach einem der vorherigen Ansprüche, wobei die Wölbungslinie (32) an einem Ausgang (B) des Diffusors (35) einen Krümmungsradius von weniger als 30 Fan-Eintrittsdurchmessern D aufweist.

## Revendications

1. Ensemble moteur à turbine à gaz (10) et admission d'air (12) (1),
- ledit moteur à turbine à gaz (10) comprend un carter de soufflante (23) et une soufflante (13) logée à l'intérieur de celui-ci adaptée pour tourner autour d'un axe principal de moteur (11) ; et l'admission d'air (12) étant raccordé au carter de soufflante (23) pour définir un passage d'admission (26) s'étendant entre un plan d'entrée (A) au niveau d'une première extrémité et une face en amont (C) de la soufflante (13) au niveau d'une seconde extrémité ;
- ledit passage d'admission (26) comprenant des parois internes supérieure et inférieure dont l'intersection avec un plan méridien contenant l'axe principal du moteur (11) définit, respectivement, un profil interne supérieur (28) et un profil interne inférieur (30) du passage d'admission (26), une ligne de cambrure (32) étant définie par le lieu des centres des cercles tangents à la fois au profil interne supérieur (28) et au profil interne inférieur (30) ; et
- ledit passage d'admission (26) comprenant en outre en série selon l'écoulement :
une lèvre d'admission (34), dont la partie la plus en amont définit le plan d'admission (A) et dont la partie la plus en aval définit une gorge (T), un diffuseur (35) avec une zone de section s'élargissant vers la soufflante (13) ; et un conduit de conditionnement rectiligne (36), agencé immédiatement en amont de la soufflante (13),
ladite ligne de cambrure (32) coupant l'axe principal du moteur (11) au niveau d'un point d'intersection (X) en amont de la soufflante (13) et ladite ligne de cambrure (32) étant parallèle à l'axe principal du moteur (11) dans le conduit de conditionnement rectiligne (36).

2. Ensemble moteur à turbine à gaz et admission d'air selon la revendication 1, ladite admission d'air (12) étant raccordée à une face de raccordement avant (27) du carter de soufflante (23) pour définir une interface de raccordement (24), ladite interface de raccordement (27) se trouvant dans le diffuseur (35) ou dans le conduit de conditionnement rectiligne (36).

3. Ensemble moteur à turbine à gaz et admission d'air selon l'une quelconque des revendications précédentes, ladite ligne de cambrure (32) entre le point d'intersection (X) et la face en amont (C) de la soufflante (13) étant parallèle à l'axe principal du moteur (11).

4. Ensemble moteur à turbine à gaz et admission d'air selon l'une quelconque des revendications précédentes, ladite ligne de cambrure (32) et ledit axe principal du moteur (11) coïncidant entre le point d'intersection (X) et la face en amont (C) de la soufflante (13).

5. Ensemble moteur à turbine à gaz et admission d'air selon l'une quelconque des revendications précédentes, ledit point d'intersection (X) étant agencé dans le diffuseur (35).

6. Ensemble moteur à turbine à gaz et admission d'air selon l'une quelconque des revendications 1 à 4, ledit point d'intersection (X) étant agencé dans la lèvre d'admission (34).

7. Ensemble moteur à turbine à gaz et admission d'air selon l'une quelconque des revendications précédentes, ladite ligne de cambrure (32) au niveau de la lèvre d'admission (34) comprenant au moins une voie courbe.

8. Ensemble moteur à turbine à gaz et admission d'air selon l'une quelconque des revendications précédentes, comprenant en outre un cône de nez (25), ledit cône de nez étant positionné dans le conduit de conditionnement rectiligne (36).

9. Ensemble moteur à turbine à gaz et admission d'air selon la revendication précédente, ledit cône de nez (25) s'étendant axialement le long de l'axe principal du moteur (11) sur une longueur L2, et ledit conduit de conditionnement rectiligne (36) s'étendant axialement le long de l'axe principal du moteur (11) sur une longueur L1, L1/L2 étant compris entre 1 et 2.

10. Ensemble moteur à turbine à gaz et admission d'air selon l'une quelconque des revendications précédentes, ledit passage d'admission (26) s'étendant sur une longueur L et ladite ligne de cambrure (32) s'étendant entre le point d'intersection (x) et la face en amont (C) de la soufflante (13) pour une longueur L3, L3/L étant compris entre 0,3 et 0,9, de préférence entre 0,4 et 0,8.

11. Ensemble moteur à turbine à gaz et admission d'air selon l'une quelconque des revendications précédentes, ladite soufflante (13) possédant un diamètre D d'entrée et ladite ligne de cambrure (32) possédant un rayon de courbure (R_{A}) au niveau du plan d'entrée (A) inférieur à 30 diamètres D d'entrée de soufflante.

12. Ensemble moteur à turbine à gaz et admission d'air selon l'une quelconque des revendications précédentes, ladite ligne de cambrure (32) possédant un rayon de courbure minimum (Rₘᵢₙ) inférieur à 30, de préférence entre 0,5 et 15, diamètres D d'entrée de soufflante.

13. Ensemble moteur à turbine à gaz et admission d'air selon la revendication précédente, ledit rayon minimum de courbure (Rₘᵢₙ) étant situé à une distance du plan d'entrée (A) inférieur ou égal à 0,6 fois, de préférence comprise entre 0,1 et 0,6, une distance axiale entre ledit plan d'entrée (A) et une sortie (B) du diffuseur (35).

14. Ensemble moteur à turbine à gaz et admission d'air selon l'une quelconque des revendications précédentes, ladite ligne de cambrure (32) en amont du point d'intersection (X) possédant un rayon de courbure compris entre 0,5 et 30 diamètres D d'entrée de soufflante.

15. Ensemble moteur à turbine à gaz et admission d'air selon l'une quelconque des revendications précédentes, ladite ligne de cambrure (32) possédant un rayon de courbure au niveau d'une sortie (B) du diffuseur (35) inférieur à 30 diamètres D d'entrée de soufflante.
